# FASCICULE DE BREVET EUROPEEN

(11) **EP 2 729 318 B1**
(45) Date de publication et mention de la délivrance du brevet: **16.03.2016**
(21) Numéro de dépôt: 12734982.7
(22) Date de dépôt: 20.06.2012
(51) Int. Cl.: B60K 6/12, B60K 6/48, B60K 6/547, B60W 30/18, F16H 37/08

(54) **CHAINE DE TRACTION D'UN VEHICULE HYBRIDE**
ANTRIEBSSTRANG FÜR EIN HYBRIDFAHRZEUG
HYBRID VEHICLE DRIVE TRAIN

(30) Priorité: 07.07.2011 FR 1156157
(43) Date de publication de la demande: 14.05.2014
(73) Titulaire: Technoboost, 75116 Paris (FR)
(72) Inventeur: ROY, Franck, F-91700 Fleury Merogis (FR); ROUSS, Vicky, F-92800 Puteaux (FR)
(74) Mandataire: Rosenberg, Muriel Sylvie
(86) Numéro de dépôt international: PCT/FR2012/051399
(87) Numéro de publication internationale: WO 2013/004937

(56) Documents cités:
- EP-A1- 0 253 975
- WO-A1-2007/104539
- DE-A1-102007 003 546

## Description

La présente invention concerne une chaîne de traction pour un véhicule hybride utilisant une énergie hydraulique, ainsi qu'un véhicule hybride comportant une telle chaîne de traction.

Certains types de véhicules hybrides, appelés hybride série et parallèle, comportent une chaîne de traction comprenant un moteur thermique, qui d'une par peut en mode série entraîner une pompe hydraulique afin de recharger des accumulateurs de pression hydraulique, pour alimenter ensuite un moteur hydraulique de traction du véhicule, et d'autre part peut en mode parallèle entraîner directement les roues motrices du véhicule par différents rapports de vitesse, tout en rechargeant si nécessaire ces accumulateurs.

Un type de chaîne de traction connu comporte un moteur thermique relié à un système de répartition de puissance comprenant un train planétaire, qui d'un côté peut entraîner les roues motrices par des rapports de vitesse, et d'un autre côté peut entraîner la pompe hydraulique de recharge de l'accumulateur de pression.

Le moteur hydraulique prélève ensuite du fluide dans l'accumulateur de pression, pour entraîner par des rapports de vitesse les roues motrices.

Cette utilisation d'énergie hydraulique stockée permet d'optimiser le fonctionnement du moteur thermique, et de réduire sa consommation ainsi que les émissions de gaz polluants. Le stockage d'énergie hydraulique permet de plus de rouler en mode hydraulique avec zéro émission, appelé mode « ZEV », le moteur thermique restant à l'arrêt.

Un problème qui se pose avec une chaîne de traction de ce type, est que l'autonomie du véhicule en mode zéro émission est limitée en fonction de la quantité d'énergie pouvant être stockée dans l'accumulateur de pression hydraulique, qui est un élément relativement lourd et encombrant. On peut chercher dans certains cas, notamment en cycle urbain pour limiter des émissions de gaz, à obtenir une autonomie plus importante sans démarrer le moteur thermique.

Le document EP-A-0 253 975 divulgue le préambule de la revendication 1.

La présente invention a notamment pour but d'éviter ces inconvénients de la technique antérieure.

Elle propose à cet effet une chaîne de traction d'un véhicule hybride conforme à la revendication 1.

Un avantage de la chaîne de traction selon l'invention, est qu'elle permet en gardant les avantages d'un fonctionnement série et parallèle du moteur thermique et du système hydraulique, d'ajouter de manière simple un système électrique additionnel comprenant la batterie qui peut facilement se loger à différents endroits du véhicule, pour apporter un complément d'autonomie en mode zéro émission.

La chaîne de traction selon l'invention peut de plus comporter une ou plusieurs des caractéristiques suivantes, qui peuvent être combinées entre elles.

Avantageusement, le système de répartition de puissance vers les deux voies comporte un train planétaire.

Le train planétaire peut comporter un porte-satellites lié au moteur thermique, un pignon solaire lié à la pompe hydraulique, et une couronne entraînant les roues motrices.

Avantageusement, la transmission mécanique entraînant les roues motrices à partir du moteur thermique, comporte plusieurs rapports de vitesse.

Avantageusement, la transmission entraînant les roues motrices à partir du moteur hydraulique, comporte plusieurs rapports de vitesse.

L'invention a aussi pour objet un premier procédé de roulage d'un véhicule équipé d'une chaîne de traction comportant l'une quelconque des caractéristiques précédentes, qui en cours de roulage en mode zéro émission, avec un entraînement par le moteur hydraulique seul qui prélève de l'énergie dans les accumulateurs de pression, fait tourner l'électropompe pour recharger ces accumulateurs à partir de l'énergie électrique stockée dans la batterie.

L'invention a aussi pour objet un deuxième procédé de roulage d'un véhicule équipé d'une chaîne de traction comportant l'une quelconque des caractéristiques précédentes, qui en cours de freinage de ce véhicule, fait travailler la machine hydraulique en pompe pour alimenter l'électropompe en fluide sous pression, de manière à faire travailler sa pompe en moteur hydraulique pour faire tourner son moteur électrique en générateur, et produire un courant de recharge de la batterie.

L'invention a de plus pour objet un véhicule hybride disposant d'une chaîne de traction comportant l'une quelconque des caractéristiques précédentes.

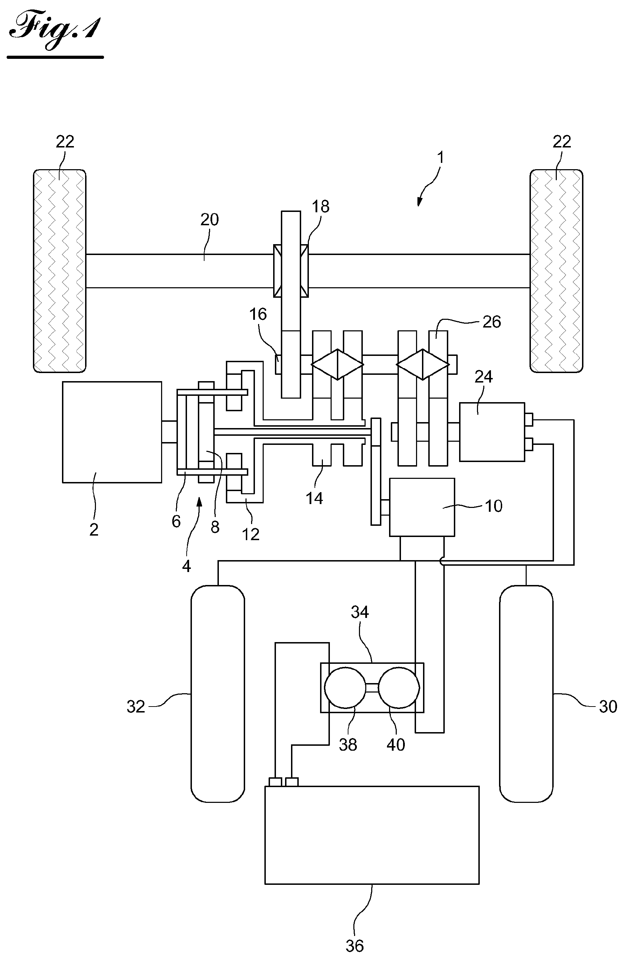

L'invention sera mieux comprise et d'autres caractéristiques et avantages apparaîtront plus clairement à la lecture de la description ci-après donnée à titre d'exemple et de manière non limitative, en référence au dessin annexé de la figure 1, qui est un schéma d'une chaîne de traction selon l'invention.

La figure 1 présente une chaîne cinématique 1 d'un véhicule, comprenant un moteur thermique 2 entraînant le porte-satellites 6 d'un train planétaire 4, qui comporte un pignon solaire 8 lié de manière permanente à une pompe hydraulique 10 comprenant une cylindrée variable, et une couronne 12 entraînant par deux rapports de vitesse 14 comprenant chacun un couple de pignons, un arbre secondaire 16.

Les deux rapports de vitesse 14 sont mis en oeuvre par un crabot qui peut engager l'un ou l'autre de ces rapports, ou dégager simultanément les deux rapports pour réaliser un point mort. L'arbre secondaire 16 entraîne à son tour deux arbres de roue 20 lié chacun à une roue motrice 22 du véhicule hybride, par un différentiel 18 qui répartit le mouvement vers ces deux roues.

Le train planétaire 4 agit comme un différentiel, et répartit suivant des rapports de vitesse déterminés, le mouvement et la puissance venant du moteur thermique 2 vers les deux voies entraînant les roues motrices 22 et la pompe hydraulique 10.

On peut ainsi en bloquant la pompe hydraulique 10, par exemple en fermant l'orifice de sortie de cette pompe, répartir le mouvement venant du moteur thermique 2 seulement sur les roues motrices 22, pour réaliser une traction du véhicule utilisant uniquement ce moteur thermique.

On peut aussi en réglant la cylindrée de la pompe hydraulique 10, ajuster le couple de freinage de cette pompe de manière à répartir la puissance entre les roues motrices 22 et la pompe hydraulique.

La pompe hydraulique 10 est reliée à un accumulateur haute pression 30 et à un autre accumulateur basse pression 32, de manière à recharger quand elle est entraînée cet accumulateur haute pression en prélevant du fluide dans l'accumulateur basse pression.

Les accumulateurs de pression 30, 32 peuvent comporter un seul élément de stockage, ou une série d'éléments reliés entre eux pour stocker une plus grande quantité d'énergie.

Les accumulateurs de pression 30, 32 sont reliés à un moteur hydraulique 24 comportant une cylindrée variable, qui entraîne par deux rapports de vitesse 26 comprenant chacun un couple de pignons, l'arbre secondaire 16. Les deux rapports de vitesse 26 sont comme pour les précédents, mis en oeuvre par un crabot qui peut engager l'un ou l'autre de ces rapports, ou dégager simultanément les deux rapports pour réaliser un point mort laissant tourner librement les roues motrices 22 sans les freiner par une rotation du moteur hydraulique 24.

Une électropompe 34 comprenant un moteur électrique 38 entraînant une pompe 40, est connectée à des batteries 36. L'électropompe 34 est reliée aux accumulateurs de pression 30, 32, pour les recharger à partir de l'énergie électrique délivrée par les batteries 36.

L'ensemble de la chaîne de traction est contrôlée par un calculateur de commande non représenté, qui en fonction d'informations sur la demande du conducteur et le fonctionnement du véhicule, pilote les différents composants, notamment le moteur thermique 2, les cylindrées variables de la pompe 10 et de la machine hydraulique 24, les crabots des rapports de vitesse 14, 26 ainsi que l'électropompe 34, pour obtenir les meilleures conditions de rendement tout en assurant le confort et les performances.

On peut notamment en cycle urbain rouler en mode zéro émission, avec un entraînement par le moteur hydraulique 24 seul qui prélève de l'énergie dans les accumulateurs de pression 30, 32, en ajustant sa vitesse de rotation par le choix du rapport de vitesse 26 pour optimiser son point de fonctionnement.

Pendant ce fonctionnement, et notamment quand la réserve de l'accumulateur haute pression 30 a suffisamment baissée, on peut faire tourner l'électropompe 34 pour recharger cette accumulateur à partir de l'énergie électrique stockée dans la batterie 36. On prolonge ainsi avec ce système l'autonomie du véhicule sans émettre de gaz polluants.

Tous les autres modes de fonctionnement attendus d'un véhicule hybride, sont possibles.

On peut notamment rouler uniquement avec le moteur thermique 2, en utilisant les rapports de vitesse 14 pour optimiser le point de fonctionnement de ce moteur thermique. On peut pendant ce roulage, utiliser en parallèle le moteur hydraulique 24 pour délivrer aux roues motrices 22 un complément de couple, qui s'ajoute à celui venant du moteur thermique 2.

On peut aussi pendant ce roulage utiliser le train planétaire 4 pour répartir la puissance venant du moteur thermique 2, entre les roues motrices 22 et la pompe hydraulique 10, afin de recharger en même temps l'accumulateur de haute pression 30.

En complément pendant les freinages du véhicule, les roues motrices 22 peuvent entraîner le moteur hydraulique 24 travaillant en pompe pour recharger l'accumulateur de haute pression 30, et ainsi récupérer une énergie cinétique du véhicule.

Pendant ce freinage si l'accumulateur de haute pression 30 est entièrement rechargé, on peut alors maintenir un débit de fluide sous pression délivré par le moteur hydraulique 24 travaillant en pompe, pour alimenter l'électropompe 34 si elle comporte un mode de fonctionnement réversible, de manière à faire travailler sa pompe 40 en moteur hydraulique pour faire tourner le moteur électrique 38 en générateur, et produire un courant de recharge de la batterie 36.

On peut ainsi récupérer une énergie supplémentaire et la stocker, pour délivrer une puissance électrique qui s'ajoutera à la puissance du fluide sous pression afin d'augmenter l'autonomie du véhicule en mode zéro émission.

On notera que l'électropompe 34 et les batteries 36 peuvent facilement s'ajouter sur le véhicule hybride, en se positionnant à différents endroits grâce aux liaisons pas câbles, ce qui permet d'apporter ce complément d'autonomie de manière modulaire ou optionnelle.

## Revendications

1. Chaîne de traction d'un véhicule hybride, comportant un moteur thermique (2) relié à un système de répartition de puissance (4) vers deux voies, qui sur une voie entraîne les roues motrices (22) de ce véhicule par une transmission mécanique (14), et sur l'autre voie entraîne une pompe hydraulique (10) de recharge d'accumulateurs de pression (30, 32), cette chaîne de traction (1) comportant aussi un moteur hydraulique (24) qui prélève le fluide de ces accumulateurs de pression pour entraîner les roues motrices (22), et comportant de plus une électropompe (34) connectée à des batteries (36), qui est reliée aux accumulateurs de pression (30, 32) pour les recharger à partir de l'énergie délivrée par ces batteries, **caractérisée en ce que** l'électropompe (34) comporte un mode de fonctionnement réversible, faisant travailler sa pompe (40) en moteur hydraulique pour faire tourner son moteur électrique (38) en générateur, et produire un courant de recharge de la batterie (36).

2. Chaîne de traction selon la revendication précédente, **caractérisée en ce que** le système de répartition de puissance vers les deux voies comporte un train planétaire (4).

3. Chaîne de traction selon la revendication 2, **caractérisée en ce que** le train planétaire (4) comporte un porte-satellites (6) lié au moteur thermique (2), un pignon solaire (8) lié à la pompe hydraulique (10), et une couronne (12) entraînant les roues motrices (22).

4. Chaîne de traction selon l'une quelconque des revendications précédentes, **caractérisée en ce que** la transmission mécanique entraînant les roues motrices (22) à partir du moteur thermique (2), comporte plusieurs rapports de vitesse (14).

5. Chaîne de traction selon l'une quelconque des revendications précédentes, **caractérisée en ce que** la transmission entraînant les roues motrices (22) à partir du moteur hydraulique (24), comporte plusieurs rapports de vitesse (26).

6. Procédé de roulage d'un véhicule équipé d'une chaîne de traction selon l'une quelconque des revendications précédentes, dans lequel, en cours de roulage en mode zéro émission, avec un entraînement par le moteur hydraulique (24) seul qui prélève de l'énergie dans les accumulateurs de pression (30, 32), ce procédé fait tourner l'électropompe (34) pour recharger ces accumulateurs à partir de l'énergie électrique stockée dans la batterie (36), **caractérisé en ce qu'**en cours de freinage de ce véhicule, ce procédé fait travailler la machine hydraulique (24) en pompe pour alimenter l'électropompe (34) en fluide sous pression, de manière à faire travailler sa pompe (40) en moteur hydraulique pour faire tourner son moteur électrique (38) en générateur, et produire un courant de recharge de la batterie (36).

7. Véhicule hybride disposant d'une chaîne de traction, **caractérisé en ce que** cette chaîne de traction est réalisée selon l'une quelconque des revendications 1 à 5.

## Patentansprüche

1. Antriebsstrang für Hybridfahrzeug, das eine Brennkraftmaschine (2) umfasst, die mit einem Leistungsverteilungssystem (4) zu zwei Abschnitten verbunden ist, das auf einem Abschnitt die Antriebsräder (22) dieses Fahrzeugs durch ein mechanisches Getriebe (14) antreibt und auf dem anderen Abschnitt eine hydraulische Pumpe (10) zum Aufladen von Druckspeichern (30, 32) antreibt, wobei dieser Antriebsstrang (1) auch einen Hydraulikmotor (24) umfasst, der Fluid von diesen Druckspeichern entnimmt, um die Antriebsräder (22) anzutreiben, und außerdem eine Elektropumpe (34) umfasst, die mit Akkumulatoren (36) verbunden ist, die mit den Druckspeichern (30, 32) verbunden ist, um sie ausgehend von der Energie, die von diesen Akkumulatoren geliefert wird, aufzuladen, **dadurch gekennzeichnet, dass** die Elektropumpe (34) eine umkehrbare Betriebsart umfasst, die ihre Pumpe (40) als Hydraulikmotor arbeiten lässt, um ihren Elektromotor (38) als Generator drehen zu lassen und einen Aufladestrom des Akkumulators (36) zu erzeugen.

2. Antriebsstrang nach dem vorhergehenden Anspruch, **dadurch gekennzeichnet, dass** das Leistungsverteilungssystem zu den zwei Abschnitten einen Planetengetriebezug (4) umfasst.

3. Antriebsstrang nach Anspruch 2, **dadurch gekennzeichnet, dass** der Planetengetriebezug (4) einen Satellitenträger (6) umfasst, der mit der Brennkraftmaschine (2) verbunden ist, ein Sonnenrad (8), das mit der Hydraulikpumpe (10) verbunden ist, und einen Kranz (12), der die Antriebsräder (22) antreibt.

4. Antriebsstrang nach einem der vorhergehenden Ansprüche, **dadurch gekennzeichnet, dass** das mechanische Getriebe, das die Antriebsräder (22) ausgehend von der Brennkraftmaschine (2) antreibt, mehrere Gänge (14) umfasst.

5. Antriebsstrang nach einem der vorhergehenden Ansprüche, **dadurch gekennzeichnet, dass** das Getriebe, das die Antriebsräder (22) ausgehend von dem Hydraulikmotor (24) antreibt, mehrere Gänge (26) umfasst.

6. Fahrverfahren eines Fahrzeugs, das mit einem Antriebsstrang nach einem der vorhergehenden Ansprüche ausgestattet ist, wobei während des Fahrens im emissionsfreien Modus mit einem Antrieb durch den Hydraulikmotor (24) allein, der Energie in den Druckspeichern (30, 32) entnimmt, dieses Verfahren die Elektropumpe (34) drehen lässt, um diese Speicher ausgehend von der elektrischen Energie, die in dem Akkumulator (36) gespeichert ist, aufzuladen, **dadurch gekennzeichnet, dass** im Laufe des Bremsens dieses Fahrzeugs dieses Verfahren den Hydraulikmotor (24) als Pumpe arbeiten lässt, um die Elektropumpe (34) mit Fluid unter Druck zu versorgen, so dass ihre Pumpe (40) als Hydraulikmotor arbeitet, um ihren Elektromotor (38) als Generator drehen zu lassen und einen Aufladestrom des Akkumulators (36) zu erzeugen.

7. Hybridfahrzeug, das über einen Antriebsstrang umfasst, **dadurch gekennzeichnet, dass** dieser Antriebsstrang gemäß einem der Ansprüche 1 bis 5 hergestellt ist.

## Claims

1. A hybrid vehicle drive train, comprising a heat engine (2) connected to a power distribution system (4) that distributes power over two paths, one path driving the driving wheels (22) of the vehicle via a mechanical transmission (14) and the other path driving a hydraulic pump (10) that refills pressure accumulators (30, 32), this drive train (1) also comprising a hydraulic motor (24) which draws the fluid from the pressure accumulators in order to drive the driving wheels (22), and also comprising an electric pump (34) which is connected to batteries (36), as well as to the pressure accumulators (30, 32) in order to refill said accumulators using power supplied by the batteries, **characterized in that** the electric pump (34) comprises a reversible mode of operation, causing its pump (40) to work as hydraulic motor to cause its electric motor (38) to turn as a generator, and to produce a recharge current of the battery (36).

2. The drive train according to the preceding claim, **characterized in that** the power distribution system over the two paths comprises a planetary gear (4).

3. The drive train according to claim 2, **characterized in that** the planetary gear (4) comprises a planet gear carrier (6) linked to the heat engine (2), a sun gear (8) linked to the hydraulic pump (10), and a ring gear (12) driving the driving wheels (22).

4. The drive train according to any one of the preceding claims, **characterized in that** the mechanical transmission driving the driving wheels (22) from the heat engine (2) comprises a plurality of gear ratios (14).

5. The drive train according to any one of the preceding claims, **characterized in that** the transmission driving the driving wheels (22) from the hydraulic motor (24) comprises a plurality of gear ratios (26).

6. A method for running a vehicle equipped with a drive train according to any one of the preceding claims, in which, in the course of running in zero emission mode, with a driving by the hydraulic motor (24) alone which withdraws energy in the pressure accumulators (30, 32), this method causes the electric pump (34) to turn to recharge these accumulators from the electrical energy stored in the battery (36), **characterized in that** during braking of this vehicle, this method causes the hydraulic machine (24) to work as a pump to supply the electric pump (34) with fluid under pressure, so as to cause its pump (40) to work as a hydraulic motor to cause its electric motor (38) to turn as a generator, and to produce a recharge current of the battery (36).

7. A hybrid vehicle having a drive train, **characterized in that** this drive train is realized according to any one of claims 1 to 5.
